# EUROPEAN PATENT SPECIFICATION

(11) **EP 0 902 209 B1**
(45) Date of publication and mention of the grant of the patent: **19.01.2005**
(21) Application number: 98102490.4
(22) Date of filing: 13.02.1998
(51) Int. Cl.: F16D 65/12

(54) **High efficiency braking and self-draining brake-disk**
Hochleistungsbremse mit selbsttrocknender Bremsscheibe
Frein à grande puissance ayant un disque de frein auto-séchant

(30) Priority: 09.09.1997 IT MI972049
(43) Date of publication of application: 17.03.1999
(73) Proprietor: Brembo S.p.A., 24035 Curno (Bergamo) (IT)
(72) Inventor: Giorgetti, Alberto, 24030 Terno D'Isola (Bergamo) (IT); Pacchiana, Giovanni Paolo, 24036 Ponte San Pietro (Bergamo) (IT); Tironi, Giovanni Mario, 24044 Dalmine (Bergamo) (IT)
(74) Representative: Lecce, Giovanni

(56) References cited:
- DE-A- 2 308 256
- DE-A- 3 927 119
- DE-U- 7 906 416
- DE-U- 29 519 929
- PATENT ABSTRACTS OF JAPAN vol. 1996, no. 10, 31 October 1996 (1996-10-31) & JP 08 145091 A (NISSAN MOTOR CO LTD), 4 June 1996 (1996-06-04)

## Description

The present invention relates to a high braking and self-draining efficiency brake-disk, as known for instance from JP-A-08 145091.

More particularly, the present invention relates to a high braking and self-draining efficiency brake-disk, especially suitable to prevent the well known undesired starting phenomena of reduction of the braking torque due to changed coupling conditions between the brake-disk surface and the friction gaskets ensuing from the interposition between the same of a water veil due to humid weather conditions, such as fog, hoarfrost, rain, etc., or on wet roads.

As is known, braking devices are elements that can slow or stop a vehicle or, generally, a moving mass, transforming the absorbed kinetic energy into thermal energy.

A braking device generally adopted in motor-vehicles is a disk brake, formed by a metal brake-disk, keyed on the wheel axle, astride which it acts as brake-pincers which press against it a couple of braking gaskets, generally known as "pads". Pincers, hydraulically activated through brake-cylinders, press the brake-gaskets against the brake-disk. Therefore, the braking action is produced by the friction between the braking surface of the brake-disk and the friction gaskets. The braking torque depends on the geometry of the device, in particular, the radial position of the friction gasket, the thrust exercised by the hydraulic cylinders and the friction coefficient between the braking surfaces of the brake-disk and the gaskets. The friction coefficient between the pads and the brake disk drastically reduces in wet contact conditions (aquaplaning), namely when, in spite of the protections suitably provided, the water reaches the brake-disk, forcing its way into the contact zone with the pads. In such conditions, an initial reduction in the friction coefficient is observed, and consequently in the braking torque, because of the fact that the contact is wet, and the torque tends even to annul when, due to the effect of the formation of a water meander between gasket and disk, conditions of hydraulic support create.

In order to increase the reliability on wet road and to reduce the fading effect, it has been proposed to provide the brake-disk surface with grooves either continuous or closed at the end, so as to create structural irregularities on the gasket-metal contact surface. This type of disk-brakes, even though they are functional and of current use, does not allow to fully solve the aquaplaning problem, as the grooves do not allow to obtain the complete expulsion of water from the disk-brake contact zone, said grooves flowing not outside the disk.

Object of this invention is to obviate said drawback of the disk-brakes of the known art.

More particularly, object of this invention it to provide a brake-disk such as to allow an easy and complete removal of the water veil from its braking surfaces.

Under its more general aspect, the present invention solves the aforesaid drawback by proving the braking surfaces of the brake-disk looking towards the braking gaskets, with radial grooves open only towards the outside of the brake-disk, and having such a shape and size as to collect water in the channels of the grooves and to expel it at high centrifugal velocity.

The object of this invention is achieved by a brake-disk suitable for use in disk braking devices provided with grooves only on their braking surfaces looking towards the braking gaskets, wherein said grooves are radial, open only towards the outside of said disk, curved with a progressive curve whose radius decreases as it proceeds towards the greater diameters of the disk, and turned backwards with reference to the rotation direction of the disk.

Preferably, said radial open grooves have a cross-section formed by a central portion shaped as a circumference arc and two opposite rectilinear portions connecting said circumference arc with the external surface of the disk, with a common tangent in the passage point. Of said rectilinear portions, the front one, with respect to the rotation of the disk, is inclined, while the back one forms an incidence angle with the disk braking surface, preventing in this way water from flowing out.

In the rotation direction of the disk and the ensuing relative movement between pads and disk, the front rectilinear portion precedes the circumference arc and therefore meets first the pad. Therefore, water is collected in the circumference arc and expelled by centrifugal force.

The grooves shaped as mentioned above, hinder the formation of the water veil in braking on a wet road, both because they interrupt the continuity of the surfaces in mutual touch and consequently the pressures in the water meander, and because their opening towards to outside facilitates the draining of the water present on the disk surface.

The cross-section of the grooves promotes the collection of water brought in by the relative movement of the pads with respect to the disk, while the channel conformation exercises a water pumping action towards the outside of the disk, so as to obtain a turbine-like action.

The particular conformation of the grooves also allows the pad surface to be constantly dressed as, at each passage of the same on a groove, the edge formed by the circumference arc portion of the groove section with the disk plane gradually encounters the pad and dresses its active surface.

The constructive and functional characteristics of the brake-disk of the present invention will be better understood thanks to the following description, wherein reference is made to the attached drawings which represent an embodiment solely given by way of non limiting example, and wherein:

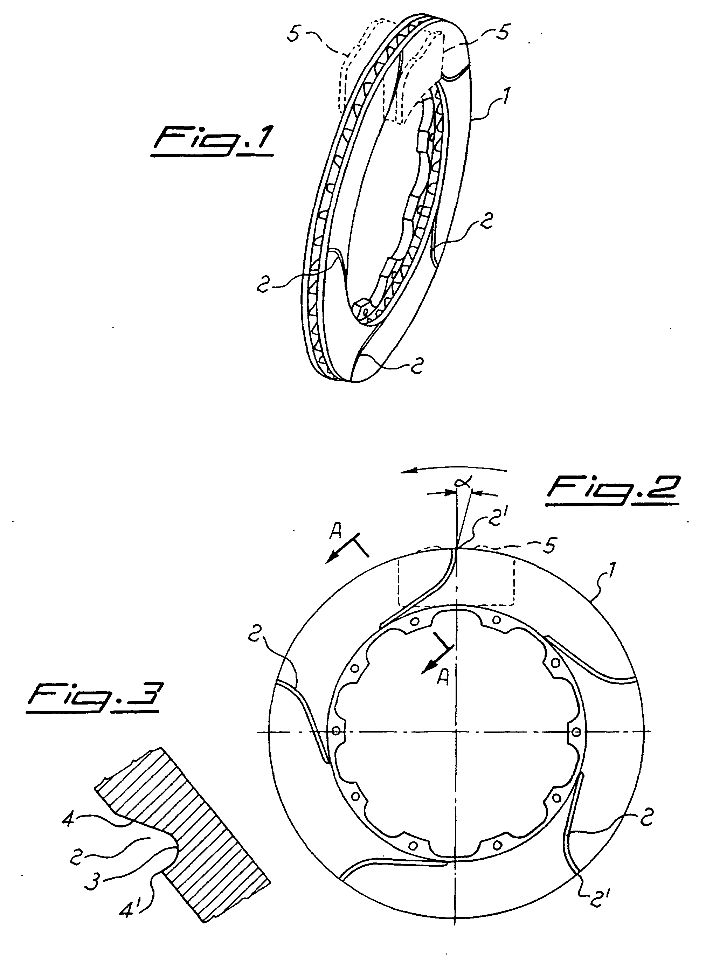

Figure 1 is a prospect view of the brake-disk of the present invention;
Figure 2 is a schematic front view of the brake-disk of Figure 1;
Figure 3 is the enlarged schematic view of a normal section of the groove axle, obtained with a through-plane along the line A-A of Figure 2, wherein the transversal profile of said grooves is visible.

With special reference to the figures, the brake-disk 1 of the present invention is provided with radial grooves 2 symmetrically arranged on its braking surfaces that come in touch with the braking gaskets 5. The number of grooves is not critical for the purposes of the present invention; generally they are at least 2, and preferably 4 to 10, on each braking surface, Said grooves 2 are open towards the outside of the disk and closed on the opposite part, looking towards the inside of disk 1.

The radial size of each groove 2 is at least equal to, and preferably greater than, the size of the braking gaskets 5.

Grooves 2 have a parabolic trend with a progressive curve whose radius decreases as it proceeds towards the greater diameters of disk 1. Besides, the open end 2' of each groove 2 has a backwards turn, with reference to the disk rotation direction and the radial direction, to overcome the friction force between the water and the channel surface. The angle α formed between the radial direction and the axis of groove 2 is preferably comprised between 2° and 20° and depends on the diameter dimension of disk 1.

As shown in Figure 3, the cross-section of each groove 2 comprises a central portion shaped as a circumference arc 3 and two opposite rectilinear portions 4 and 4' connecting said central circumference arc portion 3 and the disk external surface, with a common tangent in the passage point.

The front rectilinear portion 4, which during the rotation of disk 1 encounters first the braking gasket 5, is inclined to promote the inlet of water pushed by said gasket 5, while the back rectilinear portion 4' forms an incidence angle with the surface of disk 1 such as to prevent water from flowing out, for instance by about 90°.

In the rotation of disk 1 and the ensuing relative movement between pad 5 and disk 1, the rectilinear front portion 4 precedes the circumference arc 3 and therefore encounters first pad 5; water is pushed by gasket 5 in the circumference arc central portion 3 of grooves 2. The shape of the transversal profile of each groove 2 is such that the front rectilinear portion 4 promotes water inlet, while the rectilinear back portion 4' which forms a substantially right angle and a sharp edge with the braking surface of disk 1, prevents it from flowing out.

Water expulsion is caused by the formation of a closed section channel between the central portion 3 of groove 2 and the braking gasket 5, open towards the external periphery of disk 1 and backwards turned with respect to the rotation direction of the disk.

Water collected in said channel is therefore pumped towards the outside and then expelled the same way as happens in a centrifugal rotor.

The depth of the channels is not critical and may be either constant throughout the development of the channel or variable and increasing towards the outlet.

Channels 2 being open towards the outside of the disk also allows a visual control of the wear of the braking surfaces of the disk.

Even though the present invention has been described hereinabove with reference to a preferred embodiment, various changes and variants may be introduced in the brake-disk of the present invention, in the light of the above teaching. Therefore, it is understood that the present invention includes all changes and variants that fall within the protection scope of the following claims.

## Claims

1. High braking and self-draining efficiency brake-disk, suitable for use in disk braking devices, provided with grooves (2) on its surfaces looking towards the braking gaskets, **characterised in that** said grooves (2) are radial, open only towards the outside of said disk (1), curved with a progressive curve whose radius decreases as it proceeds towards the greater diameters of the disk, and backwards turned with reference to the rotation direction of the disk.

2. The brake-disk according to claim 1, wherein the open radial grooves (2) have a cross-section formed by a central portion shaped as a circumference arc (3) and two opposite side rectilinear portions (4, 4') connecting said central circumference arc portion (3) and the external surface of the disk, with a common tangent in the passage point.

3. The brake-disk according to claim 1 or 2, wherein the open end (2') of each groove (2) has a backwards turn, with reference to the rotation direction of the disk.

4. The brake-disk according to claim 3, wherein angle α formed between the radial direction and the axis of groove (2) is comprised between 2° and 20°.

5. The brake-disk according to claim 2, wherein the front rectilinear portion (4) which during the rotation of disk (1) encounters firs the braking gasket (5) is inclined to promote the inlet of water pushed by said gasket (5) and the back rectilinear portion (4') forms an incidence angle with the surface of disk (1) such as to prevent water from flowing out.

6. The brake-disk according to claim 5, wherein the incidence angle between the back rectilinear portion (4') and the surface of disk (1) is a 90° angle.

7. The brake-disk according to any of the preceding claims, wherein grooves (2) are at least 2, and preferably comprised between 4 and 10, on each braking surface.

8. The brake-disk according to any of the preceding claims, wherein grooves (2) are open towards the outside of the disk and closed on the opposite side looking towards the inside of disk (1).

9. The brake-disk according to any of the preceding claims, wherein the radial dimension of each groove (2) is at least equal to, and preferably greater than, the dimension of the braking gaskets (5).

10. The brake-disk according to any of the preceding claims, wherein the shape of the transversal profile of each groove (2) is such that the rectilinear front portion (4) promotes water inlet, while the rectilinear back portion (4') prevents its flowing out.

## Patentansprüche

1. Bremsscheibe mit hoher Brems- und Selbsttrocknungswirkung, welche zur Verwendung in Scheibenbremseinrichtungen geeignet ist, versehen mit Nuten (2) auf ihren zu den Bremsbelägen weisenden Oberflächen,
**dadurch gekennzeichnet, dass** die Nuten (2) radial sind, nur zu dem Äußeren der Scheibe (1) hin münden, mit einer progressiven Krümmung gekrümmt sind, deren Radius sinkt, sowie sie zu den größeren Durchmessern der Scheibe fortschreitet, und bezüglich der Drehrichtung der Scheibe nach hinten gedreht sind.

2. Bremsscheibe gemäß Anspruch 1,
wobei die offenen Radialnuten (2) einen Querschnitt aufweisen, welcher durch einen mittleren Abschnitt, welcher als ein Umfangsbogen (3) geformt ist, und zwei gegenüberliegende seitliche geradlinige Abschnitte (4, 4') gebildet ist, welche den mittleren Umfangsbogenabschnitt (3) und die externe Oberfläche der Scheibe verbinden, mit einer gemeinsamen Tangente in dem Durchgangspunkt .

3. Bremsscheibe gemäß Anspruch 1 oder 2,
wobei das offene Ende (2') jeder Nut (2) bezüglich der Drehrichtung der Scheibe eine Drehung nach hinten aufweist.

4. Scheibenbremse gemäß Anspruch 3,
wobei ein Winkel α, welcher zwischen der Radialrichtung und der Achse der Nut (2) gebildet ist, zwischen 2° und 20° umfasst.

5. Bremsscheibe gemäß Anspruch 2,
wobei der vordere geradlinige Abschnitt (4), welcher während der Rotation der Scheibe (1) zuerst auf den Bremsbelag (5) trifft, geneigt ist, um den Einlass von Wasser, welches durch den Belag (5) geschoben wird, zu unterstützen, und der hintere geradlinige Abschnitt (4') einen Einfallswinkel mit der Oberfläche der Scheibe (1) bildet, derart, dass Wasser am Ausströmen gehindert wird.

6. Bremsscheibe gemäß Anspruch 5,
wobei der Einfallswinkel zwischen dem hinteren geradlinigen Abschnitt (4') und der Oberfläche der Scheibe (1) ein 90°-Winkel ist.

7. Bremsscheibe gemäß einem der vorhergehenden Ansprüche,
wobei die Nuten (2) zumindest zwei, und vorzugsweise zwischen 4 und 10 auf jeder Bremsoberfläche sind.

8. Bremsscheibe gemäß einem der vorhergehenden Ansprüche,
wobei die Nuten (2) zu dem Äußeren der Scheibe hin geöffnet und auf der gegenüberliegenden Seite geschlossen sind, welche zu dem Inneren der Scheibe (1) hinweist.

9. Bremsscheibe gemäß einem der vorhergehenden Ansprüche,
wobei die radiale Größe jeder Nut (2) zumindest gleich, und vorzugsweise größer als die Größe der Bremsbeläge (5) ist.

10. Bremsscheibe gemäß einem der vorhergehenden Ansprüche,
wobei die Form des transversalen Profils jeder Nut (2) derart ist, dass der geradlinige vordere Abschnitt (4) Wassereinlass unterstützt, während der geradlinige hintere Abschnitt (4') sein Ausströmen verhindert.

## Revendications

1. Disque de frein à haute efficacité de freinage et d'auto-drainage, adapté pour utilisation dans des dispositifs de freinage à disque, équipé de rainures (2) sur ses surfaces orientées vers les garnitures de freinage, **caractérisé en ce que** lesdites rainures (2) sont radiales, ouvertes seulement vers l'extérieur dudit disque (1), incurvées avec une courbe progressive dont le rayon décroît à mesure qu'il avance vers les diamètres plus grands du disque, et tournées vers l'arrière par rapport au sens de rotation du disque.

2. Disque de frein selon la revendication 1, dans lequel les rainures radiales ouvertes (2) ont une section transversale formée par une partie centrale ayant la forme d'un arc de circonférence (3) et deux parties rectilignes sur les côtés opposés (4, 4') reliant ladite partie centrale en arc de circonférence (3) et la surface externe du disque, avec une tangente commune dans le point de passage.

3. Disque de frein selon la revendication 1 ou 2, dans lequel l'extrémité ouverte (2') de chaque rainure (2) a un tournant vers l'arrière, par rapport au sens de rotation du disque.

4. Disque de frein selon la revendication 3, dans lequel l'angle α formé entre le sens radial et l'axe de rainure (2) est compris entre 2° et 20°.

5. Disque de frein selon la revendication 2, dans lequel la partie rectiligne avant (4) qui pendant la rotation du disque (1) rencontre en premier la garniture de freinage (5) est inclinée pour favoriser l'entrée d'eau poussée par ladite garniture (5) et la partie rectiligne arrière (4') forme un angle d'incidence avec la surface du disque (1) de manière à empêcher l'eau de s'écouler.

6. Disque de frein selon la revendication 5, dans lequel l'angle d'incidence entre la partie rectiligne arrière (4') et la surface du disque (1) est un angle de 90°.

7. Disque de frein selon l'une quelconque des revendications précédentes, dans lequel les rainures (2) sont au moins 2, et de préférence comprises entre 4 et 10, sur chaque surface de freinage.

8. Disque de frein selon l'une quelconque des revendications précédentes, dans lequel les rainures (2) sont ouvertes vers l'extérieur du disque et fermées sur le côté opposé tourné vers l'intérieur du disque (1).

9. Disque de frein selon l'une quelconque des revendications précédentes, dans lequel la dimension radiale de chaque rainure (2) est au moins égale à, et de préférence supérieure à, la dimension des garnitures de frein (5).

10. Disque de frein selon l'une quelconque des revendications précédentes, dans lequel la forme du profil transversal de chaque rainure (2) est telle que la partie avant rectiligne (4) favorise l'entrée d'eau, tandis que la partie arrière rectiligne (4') empêche son écoulement.
